# EUROPEAN PATENT APPLICATION

(11) **EP 2 072 330 A2**
(43) Date of publication of application: **24.06.2009**
(21) Application number: 08425020.8
(22) Date of filing: 16.01.2008
(51) Int. Cl.: B60P 1/02, B60P 3/04

(54) **Loading platform for goods or animals provided with vertically moving surfaces and loading method**

(30) Priority: 21.12.2007 IT BS20070206
(71) Applicant: Carrozzeria Pezzaioli S.r.l., 25018 Montichiari (Brescia) (IT)
(72) Inventor: Pezzaioli, Giorgio, 25018 Montichiari Brescia (IT)
(74) Representative: Pulieri, Gianluca Antonio

(57) **Abstract**

A loading platform for goods or animals comprises a lower loading surface (10a), which constitutes the platform floor, an intermediate loading surface (10b) and an upper loading surface (10c), movable along the vertical direction. The moving device, connected to the intermediate surface and to the upper surface, for moving them vertically, comprises a first cylinder-piston unit (18), actuated independently of the first one, for moving the intermediate surface independently of the upper surface in lifting and lowering.

## Description

. The object of the present invention is a loading platform for goods or animals for a motor vehicle for the transport thereof, provided with vertically moving surfaces.

. Several platform exist with vertically moving surfaces for loading goods or animals, suitably designed to meet contrasting needs: obtaining a suitable space between each surface for the goods or animals transported, limiting the overall dimensions for meeting the requirements imposed by the regulations on motor vehicles, achieving optimal conditions wherein the personnel in charge carries out the platform loading, for facilitating the loading and unloading operations.

. Some solutions are known from documents EP-A1-1659023 and EP-A1-1518750, by the Applicant.

. However, it has been found that in the solutions known to date, the working conditions of the persons in charge of loading and unloading the goods or animals are especially burdensome and uncomfortable, causing longer loading times.

. In particular, it has been found that sometimes the operators are forced to load the animals remaining bent or even resting on their knees, making the operation particular tiring.

. The object of the present invention is to provide a loading platform for goods or animals provided with vertically moving surfaces which should overcome the disadvantages mentioned with reference to the prior art while meeting the above requirements.

. Such object is achieved by a platform according to the following claim 1. The dependent claims describe embodiment variations.

. The features and advantages of the platform according to the present invention will appear more clearly from the following description, made by way of an indicative and non-limiting example with reference to the annexed figures, wherein:

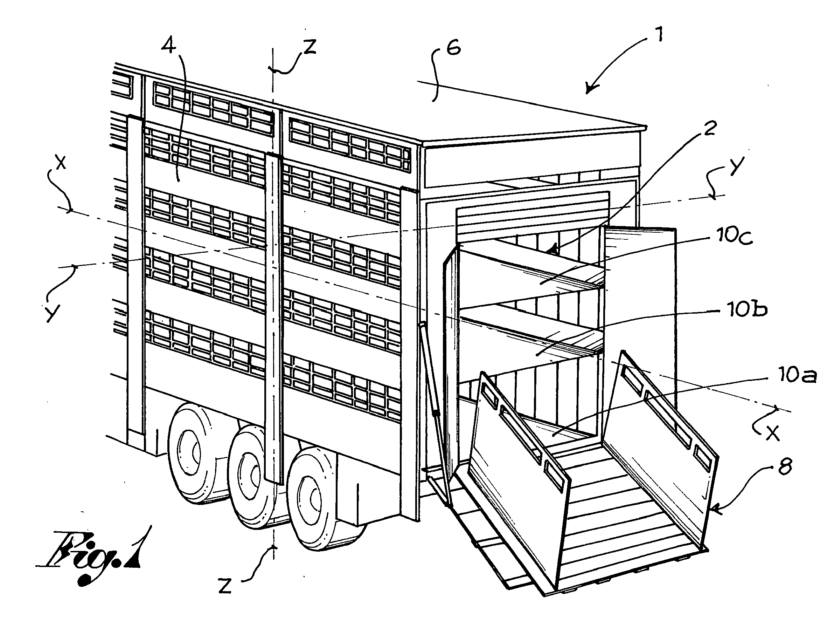

. - figure 1 shows a portion of a motor vehicle for transporting goods or animals, provided with a loading platform;

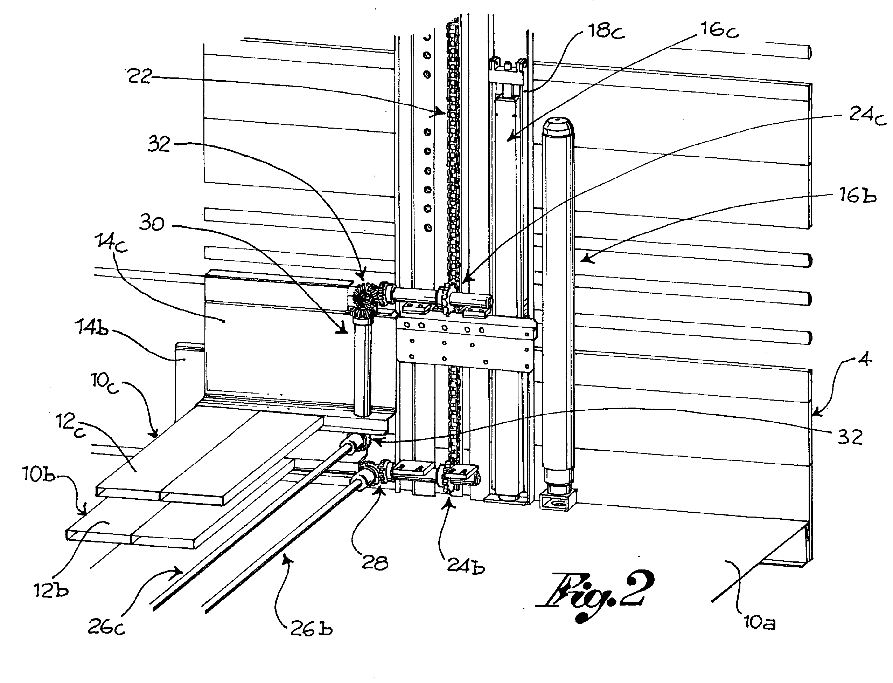

. - figure 2 shows a schematic perspective view of a lifting device for loading surfaces, inside the platform;

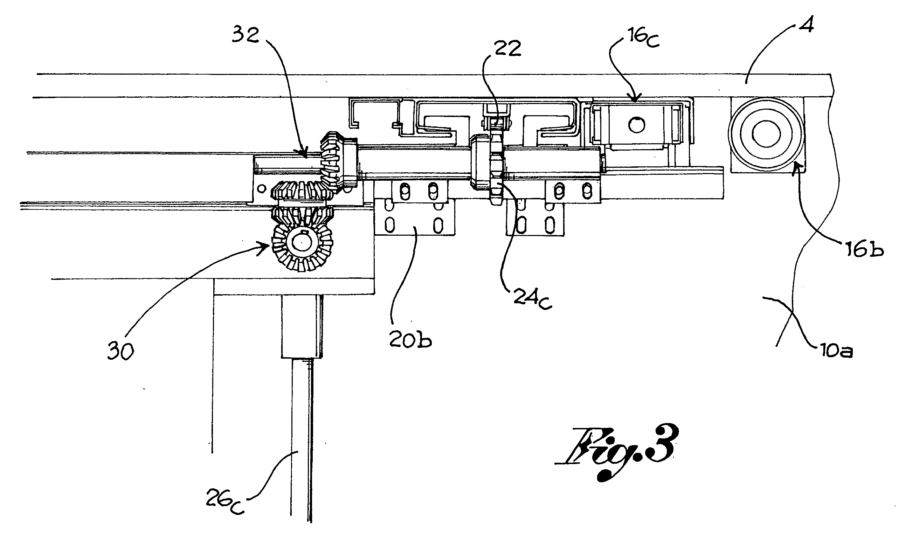

. - figure 3 shows a plan view of the lifting device of figure 2; and

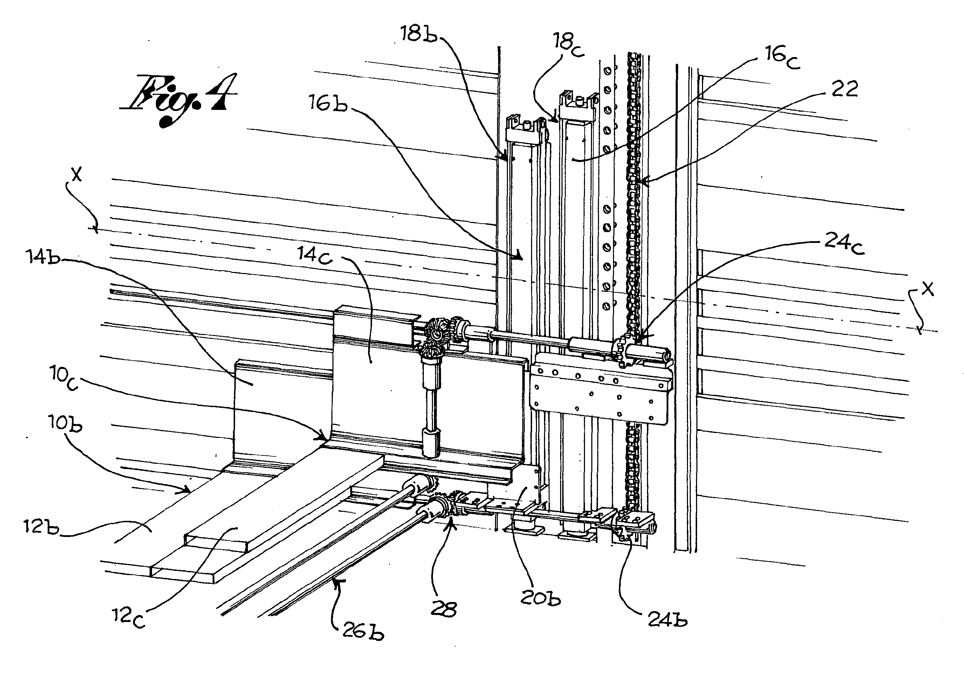

. - figure 4 shows a schematic perspective view of a lifting device according to a further embodiment of the present invention.

. In accordance with the annexed figures, reference numeral 1 globally indicates a loading platform for goods or animals for a transport vehicle.

. According to various embodiments, the platform is in a single body with the vehicle tractor or it is a trailer or a semitrailer.

. A longitudinal direction X is defined for platform 1, along the moving direction on straight line of the vehicle whereto the platform is connected, a cross direction Y, in the width direction of the platform, and a vertical direction Z, perpendicular to the road surface whereon the vehicle moves, in the direction of the platform height.

. Platform 1 exhibits an internal loading space 2 for loading goods or animals.

. The loading space 2 is transversally delimited by sides 4, preferably provided with openings for air passage towards the inner space 2.

. Vertically, at the top, space 2 is delimited by a roof 6, moving vertically for allowing the positioning of the loading surfaces, as described hereinafter.

. The platform, preferably, further comprises a footboard 8 for loading and unloading the goods, arranged at the back, so as to allow access to the inner space 2.

. Platform 1 further comprises a plurality of loading surfaces, superimposed along the vertical direction Z.

. In particular, platform 1 comprises a lower loading surface 10a, which constitutes the platform floor; generally, the lower surface 10a is fixed.

. Moreover, the platform comprises an intermediate loading surface 10b and an upper loading surface 10c, movable along the vertical direction; the intermediate surface is arranged between the lower surface 10a and the upper surface 10c.

. According to a preferred embodiment, the intermediate surface 10b comprises a bottom 12b, suitable for supporting the goods or animals loaded, and side walls 14b, transversally spaced and projecting from bottom 12b upwards.

. Likewise, according to a further embodiment, the upper surface 10c comprises a bottom 12c, suitable for supporting the goods or animals loaded, and side walls 14c, transversally spaced and projecting from bottom 12c upwards.

. In other words, said surfaces are shaped as a basin, for the optimal containment of goods or animals.

. Moreover, platform 1 comprises a moving device, connected to the intermediate surface 10b and to the upper surface 10c, for moving them vertically.

. In particular, the moving device comprises first moving means connected to the intermediate surface 10b.

. According to a preferred embodiment, the first moving means comprise at least one cylinder-piston unit 16b connected to the intermediate surface 10b for moving it on a command.

. For example, the first moving means comprise a first lifting tie rod 18b connected, on the one side, to the piston and on the other side, to the intermediate surface 10b, for example to bottom 12b thereof, for keeping the intermediate surface, and in particular said bottom, at a lower height than that of the connecting position between said piston and said first tie rod.

. Preferably, moreover, the first moving means comprise a plate 20b, fixed to the lower end of tie rod 18b, whereon surface 5 is mounted.

. Moreover, the first moving means comprise a hydraulic circuit for oil under pressure connected to the cylinder-piston unit, for the actuation thereof.

. In particular, the first moving means comprise a pair of cylinder-piston units, transversally spaced, whose pistons are mechanically connected for synchronising the movement of the intermediate surface 10b, through first synchronisation means.

. According to a preferred embodiment, the first synchronisation means comprise:

- a first fixed chain 22, arranged vertically along the right side of the platform;

- a first pinion 24b suitable for rolling, according to a longitudinal axis, on the fixed chain 22, and made integral to the intermediate surface 10b;

- a first transversal transmission shaft 26b, gripping the first pinion 24b, arranged transversal to the platform;

- a second fixed chain (not shown), arranged vertically along the left side of the platform;

- a second pinion (not shown) suitable for rolling on the second chain, made integral to the intermediate surface and gripping with the first cross transmission shaft 26b.

. For example, the first pinion 24b is suitable for rolling on the first chain 22 being supported in a rolling manner by a support with brasses, whereon further plates are fixed for the connection to the bottom of the intermediate surface 10b.

. Preferably, moreover, the first cross transmission shaft 26b grips the first pinion 24b (and the second pinion), which exhibits a longitudinal rolling axis, through a gear 28 with conical wheels.

. Preferably, the first pinion 24b, the first cross transmission shaft 26b and the second pinion are below bottom 12b of the intermediate surface 10b.

. Moreover, the moving device comprises second moving means, independently actuable by the first moving means, connected to the upper surface 10c, for moving the intermediate surface 10b independently of the upper surface 10c, in lifting and lowering.

. According to a preferred embodiment, the second moving means comprise at least one cylinder-piston unit 16c connected to the upper surface 10c for moving it on a command.

. For example, the second moving means comprise a second lifting tie rod 18c connected, on the one side, to the piston and on the other side, to the upper surface 10c, for example to bottom 12c thereof, for keeping the upper surface, and in particular said bottom, at a lower height than that of the connecting position between said piston and said second tie rod.

. For example, the second moving means comprise a plate 20c, fixed to the lower end of tie rod 18b, whereon the upper surface is mounted, for example at the side walls.

. Moreover, the second moving means comprise a hydraulic circuit for oil under pressure connected to the cylinder-piston unit, for the actuation thereof.

. In particular, the second moving means comprise a pair of cylinder-piston units, transversally spaced, whose pistons are mechanically connected for synchronising the movement of the upper surface 10c, through second synchronisation means.

. According to a preferred embodiment, the second synchronisation means comprise:

- said first fixed chain 22;

- a third pinion 24c suitable for rolling on the fixed chain 22, made integral to the upper surface 10c;

- a second transversal transmission shaft 26c, gripping the third pinion 24c, arranged transversal to the platform;

- said second fixed chain;

- a fourth pinion (not shown) suitable for rolling on the second chain, made integral to the upper surface and gripping with the second cross transmission shaft 26c.

. For example, the third pinion 24c is suitable for rolling on the first chain 22 and is supported in a rolling manner by a support with brasses, whereon further plates are fixed for the connection to the respective side wall 14c of the upper surface 10c.

. Preferably, the third pinion 24c (and the fourth pinion) is arranged at the side wall 14c of the upper surface 10c, whereas the second cross transmission shaft 26c is below bottom 12c of the upper surface 10c.

. For this reason, preferably, the third and the fourth pinion are gripping the second cross transmission shaft 26c through a pair of vertical return shafts 30, arranged externally to the upper surface 10c, at the side walls 14c.

. The third pinion 24c (and the fourth pinion) exhibits a longitudinal rolling axis, whereas the vertical return shaft 30 exhibits a vertical axis of rotation and the second cross transmission shaft 26c exhibits a cross axis of rotation: The motion transmission between third pinion 24c (and the fourth pinion) and between the vertical return shaft and the second cross transmission shaft takes place through gears 32 with conical wheels.

. According to a preferred embodiment, the synchronisation means comprise two front chains, arranged one on the left side and the other on the right side, as described above, and two back chains, which engage respective transmission shafts, as described above.

. Preferably, moreover, the moving device comprises:

. -first mechanical locking means suitable for locking the intermediate surface at a predetermined height, when the first moving means are deactivated;

. - second mechanical locking means suitable for locking the upper surface at a predetermined height, when the second moving means are deactivated.

. According to a preferred embodiment, the cylinder-piston unit 16b of the first moving means is side by side to the cylinder-piston unit 16c of the second moving means, and they are both longitudinally arranged on the same side relative to chain 22.

. Preferably, moreover, the moving device comprises control means, for example electronic or such as to allow a radio-control, operatively connected to the first and second moving means, for controlling them independently.

. In the usual loading operations, the platform according to the present invention is especially advantageous as described below.

. At first, the loading surfaces are empty and totally lowered.

. The platform ceiling is lifted, so as to not interfere with the upper surface when this is lifted.

. In a first step, the upper surface, completely lowered, exhibits the bottom thereof substantially at the floor level; the upper surface is thus filled with the goods or loaded with the animals. The personnel in charge of loading works in upright position as there are no hindrances.

. At the end of the operations for loading the upper surface, the second moving means are activated and the upper surface is led to an upper limit height, corresponding to the maximum extension of the cylinder-piston units.

. The upper limit height may even be such as to make a part of the side walls of the upper surface protrude above the sides of the platform. The position of the upper surface at the upper limit height therefore is not suitable for transporting the goods.

. In a second step, the intermediate surface, still completely lowered, exhibits the bottom thereof substantially at the floor level; the intermediate surface is thus filled with the goods or loaded with the animals. The personnel in charge of loading works in upright position as the upper surface is arranged at the upper limit height.

. At the end of the operations for loading the intermediate surface, the first moving means are activated and the intermediate surface is led to an intermediate limit height, such as to allow arranging the goods or animals between the bottom of the intermediate surface and the bottom of the upper surface to the upper limit height.

. In a third step, the lower surface is loaded with goods or animals: since the intermediate surface is at the intermediate limit height, the operations for loading (or unloading) the goods or animals can be carried out in conditions of substantial comfort and sometimes even in upright position by the personnel in charge present on the lower surface.

. At the end of the operations for loading the lower surface too, the first moving means are activated in descent, moving the intermediate surface to an intermediate transport height, such as to allow the presence of the goods or animals between the lower surface and the bottom of the intermediate surface.

. Preferably, the first locking means are activated to fix the intermediate surface at the intermediate transport height, so as to deactivate the first moving means without causing the descent of the intermediate surface.

. Moreover, the second moving means are activated in descent, moving the upper surface to a higher transport height, such as to allow the presence of the goods or animals between the bottom of the lower surface and the bottom of the upper surface. At such height, the side walls of the upper surface retract into the platform sides.

. Preferably, the second locking means are activated to fix the upper surface at the higher transport height, so as to deactivate the second moving means without causing the descent of the upper surface.

. Last, the platform ceiling is lowered and the platform is ready to carry the goods or animals.

. During the operations for rising and lowering the surfaces, the synchronisation means allow maintaining the surfaces steady, avoiding sudden inclinations thereof that could make the load tilt.

. Innovatively, the platform according to the present invention allows loading the goods or animals on multiple surfaces in particularly comfortable working conditions.

. Advantageously, moreover, the operations for rising and lowering the surfaces take place in safe conditions, thanks to the synchronisation means.

. Advantageously, moreover, such synchronisation means are mechanical and thus particularly inexpensive and reliable.

. According to a further advantageous aspect, the surfaces can be locked at the working heights, to deactivate the hydraulic moving means without causing the descent of the surfaces.

. It is clear that a man skilled in the art can make changes to the platform described above in order to meet specific and incidental needs, all falling within the scope of protection defined in the following claims.

## Claims

1. Loading platform for goods or animals, having prevailing extension along a longitudinal direction (X), having extension in width along a cross direction (Y) and extension in height along a vertical direction (Z), wherein the platform comprises:
- a lower loading surface (10a) that constitutes the platform floor;
- an intermediate loading surface (10b) and an upper loading surface (10c), movable along the vertical direction;
- a moving device, connected to the intermediate surface and to the upper surface, for moving them vertically, comprising first moving means connected to the intermediate surface;
said platform being **characterised in that** the moving device further comprises second moving means, independently actuable by the first moving means, connected to the upper surface, for moving the intermediate surface independently of the upper surface in lifting and lowering.

2. A platform according to claim 1, wherein
the moving device comprises first mechanical locking means suitable for locking the intermediate surface at a predetermined height, when the first moving means are deactivated.

3. A platform according to claim 1 or 2, wherein
the moving device comprises second mechanical locking means suitable for locking the upper surface at a predetermined height, when the second moving means are deactivated.

4. A platform according to any one of the previous claims, wherein
the first moving means comprise at least one cylinder-piston unit (16b) connected to the intermediate surface for moving it on a command.

5. A platform according to claim 4, wherein
the first moving means comprise a hydraulic circuit for oil under pressure connected to the cylinder-piston unit, for the actuation thereof.

6. A platform according to claim 4 or 5, wherein
the first moving means comprise a pair of cylinder-piston units, transversally spaced, whose pistons are mechanically connected for synchronising the movement of the intermediate surface.

7. A platform according to claim 6, wherein
the pistons are connected through first synchronisation means, comprising:
- a first fixed chain (22), arranged vertically along the right side of the platform;
- a first pinion (24b) suitable for rolling on the first chain (22), made integral to the intermediate surface;
- a first transversal transmission shaft (26b), gripping the first pinion, arranged transversal to the platform;
- a second fixed chain arranged vertically along the left side of the platform;
- a second pinion suitable for rolling on the second chain, made integral to the intermediate surface and gripping with the first cross transmission shaft.

8. A platform according to claim 7, wherein
the intermediate surface comprises a bottom (12b) and side walls (14b) transversally spaced, projecting from the bottom upwards.

9. A platform according to claim 8, wherein
the first pinion, the first cross transmission shaft and the second pinion are below the bottom of the intermediate surface.

10. A platform according to any one of claims 4 to 9, wherein
the first moving means comprise a first lifting tie rod (18b) connected to an end of the piston and to the intermediate surface for keeping the intermediate surface at a lower height than that of the connecting position between said piston and said first tie rod.

11. A platform according to any one of the previous claims, wherein
the second moving means comprise at least one cylinder-piston unit (16c) connected to the upper surface for moving it on a command.

12. A platform according to claim 11, wherein
the second moving means comprise a hydraulic circuit for oil under pressure connected to the cylinder-piston unit, for the actuation thereof.

13. A platform according to claim 11 or 12, wherein
the second moving means comprise a pair of cylinder-piston units, transversally spaced, whose pistons are mechanically connected for synchronising the movement of the upper surface.

14. A platform according to claim 13, wherein the pistons are connected through second synchronisation means, comprising:
- said first fixed chain (22), arranged vertically along a side wall of the platform;
- a third pinion (24c) suitable for rolling on the chain, made integral to the upper surface;
- a second transversal transmission shaft (26c), gripping the third pinion, arranged transversal to the platform;
- said second fixed chain, arranged vertically along the other side wall of the platform;
- a fourth pinion suitable for rolling on the second chain, made integral to the upper surface and gripping with the second cross transmission shaft.

15. A platform according to claim 14, wherein
the upper surface exhibits a bottom (12c) and side walls (14c) transversally spaced, projecting from the bottom upwards.

16. A platform according to claim 15, wherein
the second transmission shaft is arranged below the bottom of the upper surface.

17. A platform according to claim 16, wherein
the first and the second pinion are gripping the second cross transmission shaft through a pair of vertical return shafts (30), arranged externally to the upper surface at the side walls.

18. A platform according to any one of claims 11 to 17, wherein
the second moving means comprise a second lifting tie rod (18c) connected to an end of the piston and to the upper surface for keeping the upper surface at a lower height than that of the connecting position between said piston and said second tie rod.

19. A platform according to claim 4 and 7 and 11 and 14, wherein
the cylinder-piston unit of the first moving means is side by side to the cylinder-piston unit of the second moving means, and the cylinder-piston unit of the first moving means and the cylinder-piston unit of the second moving means are longitudinally arranged on the same side relative to said chains.

20. A platform according to any one of the previous claims, wherein
the moving device comprises control means operatively connected to said first and second moving means, for controlling them independently.

21. A platform according to any one of the previous claims, comprising a vertically movable ceiling (6) that vertically delimits the platform.

22. A method for loading goods or animals on a platform made according to any one of the previous claims, comprising the steps of
- arranging the upper surface and the intermediate surface at the minimum height;
- loading the goods or animals on the upper surface;
- actuating the second moving means and lifting the upper surface to the higher limit height;
- loading the goods or animals on the intermediate surface;
- actuating the first moving means and lifting the intermediate surface to an intermediate limit height suitable for keeping the goods or animals between the intermediate surface and the upper surface;
- loading the goods or animals on the lower surface;
- actuating the first moving means for lowering the intermediate surface at an intermediate transport height;
- actuating the second moving means for lowering the upper surface at a higher transport height.
